Europäisches Patentamt

European Patent Office

Office européen des brevets

(19)

(11) Veröffentlichungsnummer: **0 192 817**

**B1**

(12) **EUROPÄISCHE PATENTSCHRIFT** ·

(45) Veröffentlichungstag der Patentschrift: **25.04.90**

(51) Int. Cl.⁵: **B 23 F 19/00**

(21) Anmeldenummer: **85111532.9**

(22) Anmeldetag: **12.09.85**

(54) **Vorrichtung zum Feinbearbeiten der Verzahnung von Zahnrädern.**

(30) Priorität: **23.02.85 DE 3506499**

(43) Veröffentlichungstag der Anmeldung:
**03.09.86 Patentblatt 86/36**

(45) Bekanntmachung des Hinweises auf die
Patenterteilung:
**25.04.90 Patentblatt 90/17**

(84) Benannte Vertragsstaaten:
**DE FR GB IT**

(56) Entgegenhaltungen:
**DE-A-3 304 980**
**FR-A-2 556 633**
**FR-A-2 558 755**
**FR-A-2 558 756**

(73) Patentinhaber: **Carl Hurth Maschinen- und
Zahnradfabrik GmbH & Co
Moosacher Strasse 36
D-8000 München 40 (DE)**

(72) Erfinder: **Loos, Herbert
Ludwig-Anzengruber-Strasse 3
D-8250 Dorfen-Stadt 1 (DE)**
Erfinder: **Erhardt, Manfred
Rainerstrasse 9e
D-8031 Puchheim (DE)**

EP 0 192 817 B1

Courier Press, Leamington Spa, England.

**Beschreibung**

Die Erfindung betrifft eine Vorrichtung zum Feinbearbeiten der Verzahnung von Zahnrädern nach dem Oberbegriff des Patentanspruchs 1 bzw. des Patentanspruchs 2.

Die Erfindung geht damit aus von einem Stand der Technik, wie er aus der DE—A—33 04 980 bekannt ist. Bei dieser Vorrichtung laufen sowohl das Werkstück-Werkzeug-Paar als auch das Führungsradpaar jeweils mit Flankenspiel; jedoch sind die Flankenspiele der beiden Radpaare so angeordnet, daß die Gesamtkombination ohne Flankenspiel läuft, d.h. wenn beispielsweise beim Werkzeug die Linksflanke anliegt, dann liegt am Führungsrad der Werkzeugspindel die Rechtsflanke an. Die bekannte Vorrichtung ist nur zum Feinbearbeiten von gerad- oder schrägverzahnten Stirnrädern geeignet.

Der Erfindung liegt deshalb die Aufgabe zugrunde, die bekannte Vorrichtung so weiterzuentwickeln, daß die Flanken von sowohl geradverzahnten als auch spiralverzahnten (schrägverzahnten) Kegelrädern feinbearbeitet werden können.

Zur Lösung wird eine Vorrichtung mit den Merkmalen des Patentanspruchs 1 vorgeschlagen. Eine Vorrichtung zum Feinbearbeiten der Zahnflanken von Kegelrädern mit einem abrasiven Werkzeug unter im Abstand gekreuzten Achsen ist aus der US—A—2 942 389 bekannt. Bei dieser Vorrichtung steht ein zu bearbeitendes Kegelrad (Werkstück) mit einem kegelradförmigen, eine abrasive Oberfläche aufweisenden Werkzeug rotierend in Zahneingriff. Dabei wird das Werkstück abgebremst, wodurch das Werkzeug in gewisser Weise geführt wird, nämlich durch die Werkstückverzahnung. Verständlicherweise führt dieses Verfahren nicht zum gewünschten Erfolg, weil die Werkstückverzahnung nicht fehlerfrei ist. Somit läuft die Werkzeugverzahnung gewissermaßen der Werkstückverzahnung nach, wobei nur eine teilweise Verbesserung erfolgt, ohne daß die Ungenauigkeiten völlig beseitigt werden.

Mit der erfindungsgemäßen Vorrichtung nach Anspruch 1 wird erstmals ein Weg aufgezeigt, wie die genannten Nachteile vermieden werden könne. Insbesondere die Möglichkeit, die als zylindrische Stirn- bzw. Schraubenräder ausgebildeten Führungsräder zum verdrehenden Zustellen des Werkzeugs relativ zum Werkstück zu benutzen, vereinfacht den Aufbau der Vorrichtung. Mit den von der DE 33 04 980 A1 bekannten hyperboloidisch geformten Führungsrädern ist das nicht möglich.

Eine weitere Lösung der Aufgabe ist mit der Vorrichtung nach dem Anspruch 2 aufgezeigt. Der DE 33 04 980 A1 ist bezüglich des Achskreuzpunktes zu entnehmen, daß er bevorzugt in der Mitte der Werkstückverzahnung liegt und das Werkzeug und die Führungsräder entsprechend hyperboloidisch geformt sein sollen. Diese Anordnung läßt sich bei einer Vorrichtung zum Feinbearbeiten der Zahnflanken von Kegelrädern aus geometrischen Gründen nicht verwenden.

Die bevorzugte, aber nicht ausschließliche, Anwendung der erfindungsgemäßen Vorrichtung liegt bei gehärteten Kegelrädern, für die bisher nur das etwas ungenaue Läppen und Honen oder aufwendige Schleifverfahren für die Feinbearbeitung zur Verfügung standen.

Die Erfindung wird nachstehend anhand von drei Ausführungsbeispielen beschrieben, die in sechs Figuren dargestellt sind. Dabei zeigt

Fig. 1 schematisch ein Ausführungsbeispiel der erfindungsgemäßen Vorrichtung in einer Ansicht,

Fig. 2 in vergrößertem Maßstab, einen Ausschnitt aus der Verzahnung der Führungsräder,

Fig. 3 in ebenfalls vergrößertem Maßstab einen Ausschnitt aus der Verzahnung von Werkstück und Werkzeug,

Fig. 4 eine anderes Ausführungsbeispiel der erfindungsgemäßen Vorrichtung in einer Ansicht,

Fig. 5 eine Variante zu Fig. 4, und

Fig. 6 eine Ansicht der Vorrichtung von Fig. 5, in Pfeilrichtung VI.

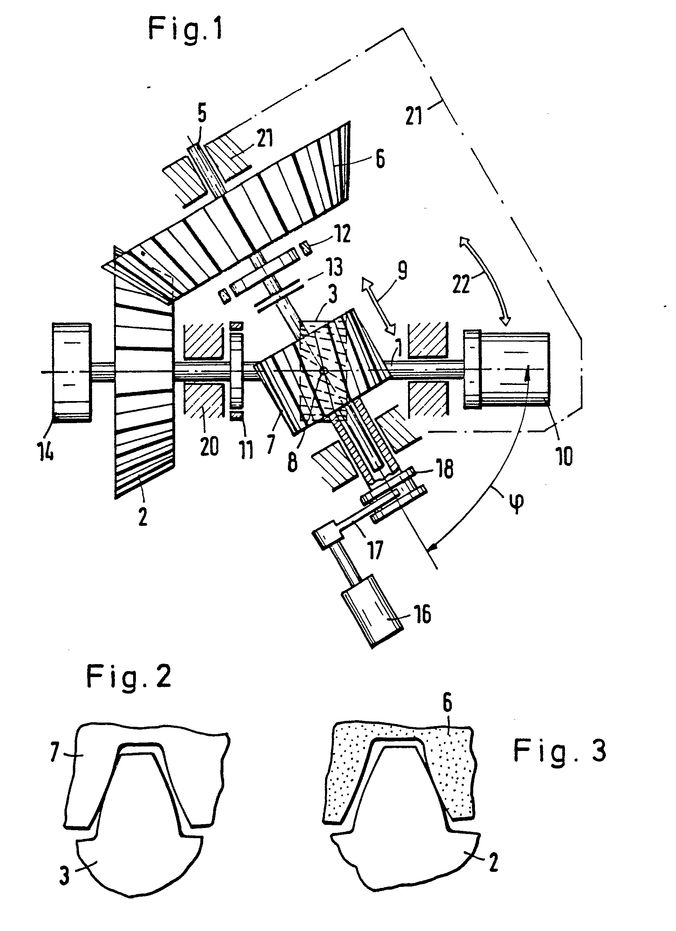

Auf einer Werkstückspinel 1, die in einem nicht näher dargestellten Gestell 20 einer Werkzeugmaschine gelagert ist, (Fig. 1) sitzen nebeneinander und achsgleich ein zu bearbeitendes Kegelrad 2 (Werkstück) und ein Führungsrad 3. Beide sind mit bekannten Einrichtungen drehfest und nicht längsverschiebbar, aber auswechselbar auf der Werkstückspinel 1 befestigt. Auf einer Werkzeugspindel 5, die in einem nicht näher dargestellten Schlitten 21 der Werkzeugmaschine gelagert ist, sitzen drehfest und nicht längsverschiebbar, aber auswechselbar ein verzahntes Werkzeug 6 in Form eines Kegelrades und drehfest, aber längsverschiebbar und ebenfalls auswechselbar ein Führungsrad 7. Das Werkzeug hat Zahnflanken mit einer abrasiven Oberfläche und kämmt mit der Verzahnung des Werkstücks 2. Das Führungsrad 7 ist wie das Führungsrad 3 ein Stirn- oder Schraubenrad. Beide Führungsräder kämmen miteinander. Die Achsen der Werkstückspindel 1 und der Werkzeugspindel 5 sind im Abstand gekreuzt. Der sogenannte Achskreuzpunkt 8 (gemeinsame Normale), d.h. die Stelle des geringstens Achsabstands, liegt innerhalb der Führungsradpaarung 3,7. Zum Verändern des Achskreuzwinkels φ ist der Schlitten 21 um den Achskreuzpunkt 8 schwenkbar (Pfeilrichtung 22) und feststellbar. Die Einrichtungen dafür sind im Werkzeugmaschinenbau bekannt.

Die Vorrichtung arbeitet gewissermaßen nach dem sogannten Tauchverfahren, d.h. die Zahnflanken der Werkstückverzahnung werden ohne ein Längsverschieben des Werkzeugs relativ zum Werkstück bearbeitet, z.B. geschliffen. Es ist daher erforderlich,. daß sich der Wälzkörper (in der Achsrichtung ausgedehnter Wälzkreis) des Werkzeugs an den Wälzkörper des Werkstücks anschmiegt. Außerdem muß die gesamte Werkstück-Zahnbreite von der Werkzeugverzahnung überdeckt werden. Beide Forderungen lassen sich verhältnismäßig einfach verwirklichen, wenn das Werkzeug 6 und das Werkstück 2 nach der Art eines Hypoidgetriebes zusammenwirken.

Die Verzahnung der Führungsrad-Paarung kann—wie dargestellt—der eines bekannten Getriebes mit gekreuzten Achsen entsprechen. Vorteilhaft und der Arbeitsqualität der Vorrichtung zuträglich ist es, wenn sie der Lage des Achskreuzpunktes entsprechend hyperboloidisch oder ähnlich geformt ist. Zum Betrieben der Vorrichtung ist auf der Werkstückspindel 1 ein Motor 10 vorgesehen sowie eine Bremse 11. Die Werkzeugspindel 5 ist mit einer Bremse 12 und einer Trennkupplung 13 ausgestattet. Mit diesen Einrichtungen, die auch an anderen Stellen angeordnet oder durch eine Schwungmasse 14 und/oder einen weiteren Motor an der Werkzeugspindel 5 ergänzt sein können, kann das Werkstück 2 unter Einflankenanlage des Werkzeugs 6 bearbeitet werden.

In Figur 2 ist eine Zahnlücke des Führungsrades in vergrößertem Maßstab gezeichnet, in die ein Zahn des Führungsrades 3 eingreift. Die Zahnflanken liegen links an, während auf der rechten Seite Flankenspiel vorhanden ist. In Figur 3 sind ebenfalls in vergrößertem Maßstab eine Zahnlücke des Werkzeugs 6 und ein Zahn des Werkstücks 2 gezeichnet. Hier liegen die Zahnflanken auf der rechten Seite an, während links Spiel vorhanden ist. In dem gezeigten Beispiel wird also die rechte Zahnflanke des Werkstücks bearbeitet, während die linke Flanke des achsgleichen Führungsrades 3 führt und abstützt. Zur Bearbeitung der anderen Werkstück-Zahnflanke wird die relative Lage innerhalb der beiden Radpaarungen gewechselt, es liegen dann also die Flanken auf der rechten Seite in Figur 2 und auf der linken Seite in Figur 3 aufeinander.

Das Führungsrad 7 ist, wie schon erwähnt, längsverschiebbar auf der Werkzeugspindel 5 gelagert. Zum Bewerkstelligen der Längsverschiebung 9 ist ein Motor 16 vorgesehen, der mittels einer Schaltgabel 17 an einem Ansatz 18 des Führungsrades 7 angreift. Wird der Motor 16 eingeschaltet, dann wird das Führungsrad 7 auf der Werkzeugspinel 5 verschoben, die dabei mit der Trennkupplung 13 unterbrochen und mit der Bremse 12 festgehalten wird. Bedingt durch die Zahnschrägung hat die Längsverschiebung 9 ein relatives Verdrehen der Führungsräder 3, 7 und damit des Werkstücks 2 relativ zum Werkzeug 6 zur Folge.

Zum Wechseln der treibenden und damit auch der getriebenen Zahnflanken kann auch die Drehrichtung des Motors 10 gewechselt und die Trennkupplung 13 zunächst geöffnet und—nach erfolgtem Flankenwechsel—wieder geschlossen werden. Die Bremsen 11, 12 können dabei unterstützend eingesetzt werden.

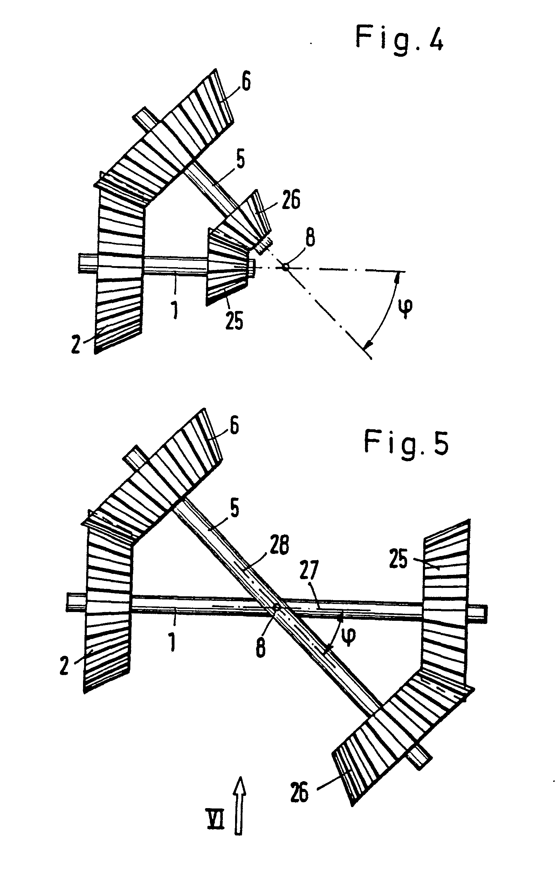

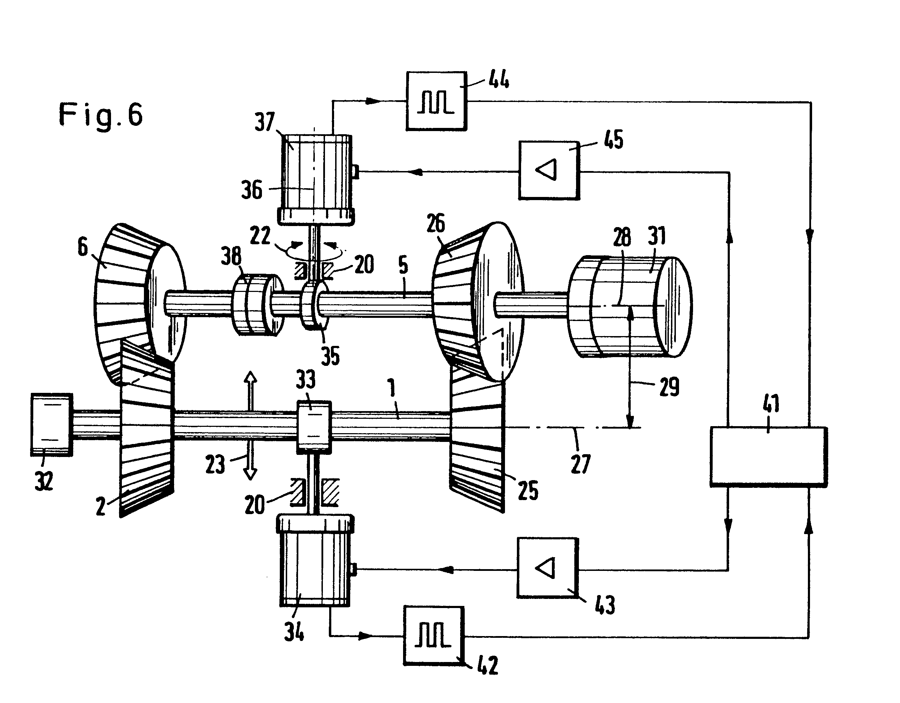

Bei den Ausführungsbeispielen nach den Figuren 4 und 5 sind die Führungsräder wie das Werkstück 2 und das Werkzeug 6 als Kegelräder 25, 26 ausgebildet. Sie können zwischen dem Werkstück-Werkzeug-Paar 2, 6 und dem Achskreuzpunkt 8 angeordnet sein (Figur 4) oder—vom Werkstück-Werkzeug-Paar 2, 6 aus gesehen—jenseits des Achskreuzpunktes (Figur 5). Zu beachten ist, daß in beiden Fällen sowohl das Werkstück-Werkzeug-Paar 2, 6 als auch das Führungsgrad-Paar 25, 26 in der Art von Hypoidgetrieben gestaltet sind. Die Achse 27 der Werkstückspindel und die Achse 28 der Werkzeugspindel kreuzen sich im Achskreuzpunkt 8 in einem Abstand 29 (Fig. 6).

In den Figuren 4 und 5 sind der Deutlichkeit halber nur die beiden Spindeln 1 und 5 mit dem Werkstück 2, dem Werkzeug 6 und dem Führungsrad-Paar 25, 26 gezeigt. In Figur 6 ist die Vorrichtung nach Figur 5 in einer zweiten Ansicht entsprechend Pfeilrichtung VI gezeigt (Figur 6 gilt sinngemäß aber auch für die Vorrichtung nach Figur 4) und dabei sind auch die wesentlichen übrigen Einrichtungen der Vorrichtung dargestellt.

Die Werkzeugspindel 5 ist mit einem Motor 31 für eine Rotationsbewegung (Abwälzbewegung zwischen Werkzeug und Werkstück) antreibbar. Die Verzahnung des Werkzeugs 6 treibt das Werkstück 2 an. Die Werkstückspindel 1 wird von einem Werkstückträger 33 getragen, der mittels im Werkzeugmaschinenbau bekannter, nicht dargestellter Einrichtungen von einem Vorschubmotor 34 rechtwinkelig zu den Spindeln 1, 5 verschiebbar ist (Tiefenvorschub 23). Es können auch andere geeignete Vorschubmittel vorgesehen sein. Die üblichen und bekannten Maschinenteile wie Führungen, Lager u.dgl. sind im Schema ebenfalls fortgelassen.

Die Werkzeugspindel 5 wird von einem Werkzeugträger 35 getragen. Der Werkzeugträger 35 ist im Maschinengestell 20 schwenkbar gelagert und zwar um eine Achse 36, die rechtwinkelig zu den Spindeln 1, 5 gerichtet ist. Die Schwenkbewegung 22 wird von einem Schwenkmotor 37 erzeugt.

Auf der Werkstückspindel 1 ist das Führungsrad 25 und auf der Werkzeugspindel 5 das Führungsrad 26 angeordnet. Beide kämmen miteinander, haben das gleiche Übersetzungsverhältnis wie das Werkstück-Werkzeug-Paar 2,6 und sind der Lage des Achskreuzpunktes 8 (gemeinsame Normale) angepaßt. Die Werkzeugspindel 5 kann mittels einer schaltbaren Kupplung 38 unterbrochen werden. Auf der Werkstückspindel 1 sitzt eine Bremse 32 oder eine Schwungscheibe. Die beiden Radpaare arbeiten mit Flankenspiel, d.h. es liegen beim Bearbeiten nur immer jeweils eine Flanke der Zähne aufeinander. Die Flankenspiele sind aber so aufeinander abgestimmt, daß beide Radpaare zusammen ohne Flankenspiel laufen, d.h. liegt bei einem Rad beispielsweise die Rechtsflanke an, dann liegt bei dem anderen Rad der gleichen Spindel die Linksflanke an. Zum Wechseln der arbeitenden Zahnflanken wird die Schaltkupplung 38 kurzzeitig geöffnet und die Drehrichtung des Motors 31 gewechselt oder ein nicht dargestelltes Wendegetriebe geschaltet. Die Bremser 32 oder die Schwungsheibe sorgt dann für die Anlage der gewünschten Zahnflanken.

Der Tiefenvorschub des Werkstückträgers 33 wird von einer CNC-Steuerung 41 gesteuert, die dazu über einen Inkrementalgeber 42 und eine Verstärker 43 mit dem Vorschubmotor 34 verbunden ist. Gleichzeitig steuert die CNC-Steuerung 41 die Verstellung des Achskreuzwinkels φ. Dazu ist sie über einen Inkrementalgeber 44 und einen Verstärker 45 mit dem Schwenkmotor 37 verbunden. Tiefenvorschub und Verstellung des Achskreuzwinkels φ erfolgen in Abhängigkeit voneinander, d.h., die CNC-Steuerung 41 steuert die Motoren 34, 37 derart, daß einem bestimmten Tiefenvorschub-Weg eine Winkelverstellung um einen ganz bestimmten Betrag entspricht. Anstelle der CNC-Steuerung 41 kann auch eine NC-Steuerung oder eine sonstige entsprechende Steuerung verwendet werden, z.B. eine Kulissensteuerung oder andere mechanische, elektrische, hydraulische oder pneumatische Mittel.

Wird durch Zustellen oder Abrücken des Werkstückträgers 33 der Achsabstand 29 verändert, dann wird mit den vorstehend genannten Steuermitteln sichergestellt, daß das Werkstück 2 und das Werkzeug 6 einerseits und die beiden Führungsräder 3, 7 andererseits einander immer radial genähert bzw. voneinander entfernt werden. Ohne diese Steuermittel würde das Nähern bzw. Entfernen nur in Richtung des Tiefenvorschubs 23 erfolgen und zu einer verfälschung der Zahneingriffe und damit zu falschen Bearbeitungsresultaten führen.

## Patentansprüche

1. Vorrichtung zum Feinbearbeiten der rechten und der linken Flanken der Verzahnung eines Zahnrads (Werkstück 2) nacheinander mit Flankenwechsel durch Abwälzen mit einem zahnradartigen, auf einer Werkzeugspindel (5) angeordneten Werkzeug (6), dessen Achse die Achse des auf einer Werkstückspindel (1) angeordneten Werkstücks (2) mit Abstand kreuzt (Achskreuzwinkel φ) und das eine abrasive, d.h. keine einheitlich gerichteten Schneidkanten aufweisende Oberfläche und eine solche axiale Abmessung hat, daß es von einer Stirnseite der Werkstückverzahnung bis zur anderen im Eingriff steht, mit einer Einrichtung zum Verstellen des Achsabstands der beiden Spindeln (1, 5), einer Einrichtung zum Verstellen des Achskreuzwinkels (φ), mit Einrichtungen (10, 11, 12) zum Antreiben mindestens einer der beiden Spindeln (1, 5) und zum Abbremsen zumindest der jeweils anderen Spindel (5, 1), mit zwei als Stirnrad oder Schraubenrad ausgebildeten Führungsrädern (3, 7), von denen das eine (7) mit dem Werkzeug (6) und das andere (3) mit dem Werkstück (2) gleichachsig gekuppelt ist, wobei die Führungsräder (3, 7) miteinander kämmen, dasselbe Übersetzungsverhaltnis aufweisen wie das Werkstück-Werkzeug-Paar (2, 6) und beim Abwälzen sowohl das Werkstück-Werkzeug-Paar (2, 6) als auch das Führungsradpaar (3, 7) mit Flankenspiel derart in Eingriff stehen, daß bei dem einen Paar die rechten oder die linken Zahnflanken anliegen, während bei dem anderen Paar die anderen Zahnflanken anliegen, mit einer zwischen dem Werkzeug (6) und dem zugehörigen Führungsrad (7) und/oder zwischen dem Werkstück (2) und dem zugehörigen Führungsrad (3) vorgesehen Trennkupplung (13), und mit Mitteln für ein Verdrehen des Werkzeugs (6) relativ zum Werkstück (2) zum Zustellen für die Spanabnahme und zum Flankenwechsel, dadurch gekennzeichnet, daß das Werkzeug (6) zur Bearbeitung von kegelradförmigen Werkstücken (2) kegelradförmig ausgebildet ist, wobei das Werkzeug (6) und das Werkstück (2) nach Art eines Hypoidtriebs miteinander kämmen, daß der Achskreuzpunkt (8) innerhalb der Breiten der beiden Führungsräder (3, 7) liegt und daß zum Verdrehen mindestens eines der beiden Führungsräder relativ zum anderen axial verschiebbar und dafür antreibbar (16, 17, 18) ist.

2. Vorrichtung zum Feinbearbeiten der rechten und der linken Flanken der Verzahnung eines Zahnrads (Werkstück 2) nacheinander mit Flankenwechsel durch Abwälzen, mit einem zahnradartigen, auf einer Werkzeugspindel (5) angeordneten Werkzeug (6), dessen Achse (28) die Achse (27) des auf einer Werkstückspindel (1) angeordneten Werkstücks (2) mit Abstand (29) kreuzt (Achskreuzwinkel (φ) und das eine abrasive, d.h. keine einheitlich gerichteten Schneidkanten aufweisende Oberfläche und eine solche axiale Abmessung hat, daß es von einer Stirnseite der Werkstückverzahnung bis zur anderen im Eingriff steht, mit einer Einrichtung (34) zum Verstellung des Achsabstands (29) der beiden Spindeln (1, 5), einer Einrichtung (37) zum Verstellen des Achskreuzwinkels (φ), mit Einrichtungen (31, 32) zum Antreiben mindestens einer der beiden Spindeln (1, 5) und zum Abbremsen zumindest der jeweils anderen Spindel (5, 1), mit zwei Führungsrädern (25, 26), von denen das eine (26) mit dem Werkzeug (6) und das andere (25) mit dem Werkstück (2) gleichachsig gekuppelt ist, wobei die Führungsräder (25, 26) miteinander kämmen, dasselbe Übersetzungsverhältnis aufweisen wie das Werkstück-Werkzeug-Paar (2, 6) und beim Abwälzen sowohl das Werkstück-Werkzeug-Paar (2, 6) als auch das Führungsradpaar (25, 26) mit Flankenspiel derart in Eingriff stehen, daß bei dem einen Paar die rechten oder die linken Zahnflanken anliegen, während bei dem anderen Paar die anderen Zahnflanken anliegen, mit einer zwischen dem Werkzeug (6) und dem zugehörigen Führungsrad (26) und/oder zwischen dem Werkstück (2) und dem zugehörigen Führungsrad (25) vorgesehenen Trennkupplung (38) und mit Mitteln für ein Verdrehen des Werkzeugs (6) relativ zum Werkstück (2) zum Flankenwechsel, dadurch gekennzeichnet, daß das Werkzeug (6) zur Bearbeitung von kegelrädförmigen Werkstücken (2) kegelradförmig ausgebildet ist, wobei das Werkzeug (6) und das Werkstück (2) nach Art eines Hypoidtriebs miteinander kämmen, daß die beiden Führungsräder (25, 26) kegelig ausgebildet sind und vom Werkstück-Werkzeug-Paar (2, 6) aus gesehen, vor dem Achskreuzpunkt (8) oder jenseits dieses Punktes angeordnet sind und daß die Verstelleinrichtung (34) für den Achsabstand (29) mit einer Steuereinrichtung (41) verbunden ist, die auf die Verstelleinrichtung (37) für den Achskreuzwinkel (φ) derart einwirkt, daß das Werkzeug (6) und das Werkstück (2) einerseits und die kegeligen Führungsräder (25, 26) andererseits einander immer radial genähert werden.

## Revendications

1. Dispositif pour la finition des flancs droits et des flancs gauches de la denture d'une roue dentée (pièce d'oeuvre 2), successivement avec alternance des flancs, par usinage en développante avec un outil (6) en forme de roue dentée, disposé sur une broche d'outil (5) dont l'axe croise à une certaine distance (angle φ de croisement des axes) l'axe de la pièce d'oeuvre (2) disposée sur une broche de pièce d'oeuvre (1), cet outil ayant une surface abrasive, c'est-à-dire qui ne comporte pas d'arêtes coupantes orientées de façon homogène, et ayant un dimensionnement axial tel qu'il est en prise d'une face frontale de la pièce d'oeuvre à l'autre face frontale, ce dispositif comportant des moyens pour régler la distance des axes des deux broches (1, 5), des moyens pour régler l'angle (φ) de croisement des axes, des moyens (10, 11, 12) pour entraîner au moins une des deux broches (1, 5) et pour freiner au moins l'autre broche (5, 1), ce dispositif comportant également deux roues de guidage (3, 7) revêtant la forme de roues dentées droites ou de roues hélicoïdales, et dont l'une (7) est couplée coaxialement avec l'outil (6) tandis que l'autre (3) est couplée coaxialement avec la pièce d'oeuvre (2), ces deux roues de guidage (3, 7) engrenant l'une avec l'autre et comportant le même rapport de transmission que la paire pièce d'oeuvre-outil (2, 6), tandis que, lors de l'usinage en développante, aussi bien la paire pièce d'oeuvre-outil (2, 6) que la paire de roues de guidage (3, 7) est en prise par un jeu de flancs de façon que pour l'une des paires, les flancs droits ou les flancs gauches des dents sont appliqués, tandis que pour l'autre paire, les autres flancs sont appliqués, le dispositif comportant, en outre, un accouplement de séparation entre l'outil (6) et la roue de guidage (7) qui lui est associée et/ou entre la pièce d'oeuvre (2) et la roue de guidage (3) qui lui est associée, ainsi que des moyens pour faire tourner l'outil (6) par rapport à la pièce d'oeuvre (2) afin de permettre l'avance pour l'usinage et pour l'alternance des flancs, dispositif caractérisé en ce que, pour l'usinage de pièces d'oeuvre (2) en forme de roues dentées coniques, l'outil (6) revêt la forme d'une roue dentée conique, cet outil (6) et la pièce d'oeuvre (2) engrenant ensemble à la façon d'engrenages hypoïdes, le point de croisement (8) des axes se trouvant à l'intérieur des largeurs des deux roues de guidage (3, 7), tandis que pour permettre la rotation, au moins une des deux roues de guidage est susceptible d'être déplacée axialement par rapport à l'autre et est susceptible d'être entraînée (16, 17, 18) à cet effet.

2. Dispositif pour la finition des flancs droits et des flancs gauches de la denture d'une roue dentée (pièce d'oeuvre 2), successivement avec alternance des flancs, par usinage en développante avec un outil (6) en forme de roue dentée

disposé sur une broche d'outil (5) dont l'axe (28) croise (angle de croisement φ des axes), à une certaine distance (29), l'axe (27) de la pièce d'oeuvre (2) disposée sur une broche de pièce d'oeuvre (1), cet outil ayant une surface abrasive, c'est-à-dire qui ne comporte pas d'arêtes coupantes orientées de façon homogène, et ayant un dimensionnement axial tel qu'il est en prise d'une face frontale de la denture de la pièce d'oeuvre à l'autre face frontale, ce dispositif comportant des moyens (34) pour régler la distance (29) des axes des deux broches (1, 5), des moyens (37) pour régler l'angle (φ) de croisement des axes, des moyens (31, 32) pour entraîner au moins une des deux broches (1, 5) et pour freiner au moins l'autre broche (5, 1), ce dispositif comportant également deux roues de guidage (25, 26), dont l'une (26) est couplée coaxialement avec l'outil (6), tandis que l'autre (25) est couplée coaxialement avec la pièce d'oeuvre (2), ces deux roues de guidage (25, 26) engrenant l'une avec l'autre et comportant le même rapport de transmission que la paire pièce d'oeuvre-outil (2, 6), tandis que lors de l'usinage en développante, aussi bien la paire pièce d'oeuvre-outil (2, 6) que la paire de roues de guidage (25, 26) est en prise par un jeu de flancs, de façon que pour l'une des paires, les flancs droits ou les flancs gauches des dents sont appliqués, alors que pour l'autre paire, les autres flancs sont appliqués, le dispositif comportant, en outre, un accouplement de séparation (38) entre l'outil (6) et la roue de guidage (26) qui lui est associée et/ou entre la pièce d'oeuvre (2) et la roue de guidage (25) qui lui est associée, ainsi que des moyens pour faire tourner l'outil (6) par rapport à la pièce d'oeuvre (2) afin de permettre l'alternance des flancs, dispositif caractérisé en ce que, pour l'usinage de pièces d'oeuvre (2) en forme de roues dentées coniques, l'outil revêt la forme d'une roue dentée conique, cet outil (6) et la pièce d'oeuvre (2) engrenant ensemble à la façon d'engrenages hypoïdes, les deux roues de guidage (25, 26) étant coniques, et vues depuis la paire pièce d'oeuvre-outil, étant disposées devant le point (8) de croisement des axes ou de l'autre côté de ce point, et les moyens (34) pour le réglage de la distance (29) des axes étant reliés à des moyens de commande (41) qui agissent sur les moyens (37) de réglage de l'angle (φ) de croisement des axes de façon que l'outil (6) et la pièce d'oeuvre (2), d'une part, et les roues coniques de guidage (25, 26), d'autre part, soient toujours rapprochés radialement les uns des autres.

## Claims

1. Apparatus for fine machining the right-hand and left-hand flanks of the toothing of a gear wheel (workpiece 2) in succession with changing of the flanks by rolling with a gear wheel type tool (6) arranged on a tool spindle (5), the axis of which crosses (axis crossing angle φ) at a distance the axis of the workpiece (2) arranged on a workpiece spindle (1) and which has a surface which is abrasive, i.e. with no uniformly directed cutting edges, and such an axial dimension that it is engaged from one end face of the workpiece toothing to the other, with a device for adjusting the axial distance of the two spindles (1, 5), a device for adjusting the axis crossing angle (φ), with devices (10, 11, 12) for driving at least one of the two spindles (1, 5) and for braking at least the other spindles (5, 1) in each case, with two guide wheels (3, 7) formed as a spur wheel or helical gear wheel, one (7) of which is coupled with the tool (6) and the other (3) with the workpiece (2) along the same axis, the guide wheels (3, 7) meshing with each other, having the same transmission ratio as the workpiece/tool pair (2, 6) and during rolling both the workpiece/tool pair (2, 6) and the guide wheel paire (3, 7) being engaged with flank clearance such that in the case of one pair the right-hand or the left-hand tooth flanks abut, while in the case of the other pair the other tooth flanks abut, with a disconnection coupling (13) provided between the tool (6) and the associated guide wheel (7) and/or between the workpiece (2) and the associated guide wheel (3), and with means for turning the tool (6) relative to the workpiece (2) for the purpose of advancing for chip removal and for the purpose of changing the flanks, characterized in that the tool (6) for machining bevel-gear shaped workpieces (2) is formed as a bevel gear, the tool (6) and the workpiece (2) meshing with each other in the manner of a hypoid drive, that the axis crossing point (8) lies within the breadths of the two guide wheels (3, 7) and that, for the purposes of turning, at least one of the two guide wheels is axially displaceable relative to the other and can be driven for this purpose (16, 17, 18).

2. Apparatus for fine machining the right-hand and left-hand flanks of the toothing of a gear wheel (workpiece 2) in succession with changing of the flanks by rolling, with a gear wheel type tool (6) arranged on a tool spindle (5), the axis (28) of which crosses (axis crossing angle φ) at a distance (29), the axis (27) of the workpiece (2) arranged on a workpiece spindle (1) and which has a surface which is abrasive, i.e. with no uniformly directed cutting edges, and such an axial dimension that it is engaged from one end face of the workpiece toothing to the other, with a device (34) for adjusting the axial distance (29) of the two spindles (1, 5), a device (37) for adjusting crossing angle (φ), with devices (31, 32) for driving at least one of the two spindles (1, 5) and for braking at least the other spindle (5, 1) in each case, with two guide wheels (25, 26), one (26) of which is coupled with the tool (6) and the other (25) with the workpiece (2) along the same axis, the guide wheels (25, 26) meshing with each other, having the same transmission ratio as the workpiece/tool pair (2, 6) and during rolling both the workpiece/tool pair (2, 6) and the guide wheel pair (25, 26) being engaged with flank clearance such that in the case of one pair the right-hand or the left-hand tooth flanks abut, while in the case of the other pair, the other tooth flanks abut, with a disconnection coupling (38) provided between the tool (6) and the associated guide wheel (26) and/or between the workpiece (2) and the associated guide wheel (25) and with means for turning the tool (6) relative to the workpiece (2) for the purpose of changing the flanks, characterized if that the tool (6) for machining bevel-gear shaped workpieces (2) is formed as a bevel gear, the tool (6) and the workpiece (2) meshing with each other in the manner of a hypoid drive, that both guide wheels (25, 26) are conically formed and, viewed from the workpiece/tool pair (2, 6), are arranged in front of the axis crossing point (8) or on the other side of this point and that the adjusting device (34) for the axial distance (29) is connected to a control device (41) which acts on the adjusting device (37) for the axis crossing angle (φ) in such a way that the tool (6) and the workpiece (2) on the one hand and the conical guide wheels (25, 26) on the other hand are always brought radially closer to each other.

## Fig.1

## Fig.2

## Fig. 3

# Fig. 4

# Fig. 5

Fig.6

EP 0 192 817 B1